# EUROPEAN PATENT APPLICATION

(11) **EP 4 741 117 A1**
(43) Date of publication of application: **13.05.2026**
(21) Application number: 24835939.0
(22) Date of filing: 24.06.2024
(51) Int. Cl.: B25J 15/08, B25J 15/00, B25J 15/10

(54) **GRIPPING DEVICE, CONVEYANCE DEVICE, AND GRIPPING METHOD**

(30) Priority: 06.07.2023 JP 2023111495
(71) Applicant: HITACHI HIGH-TECH CORPORATION, Tokyo 105-6409 (JP)
(72) Inventor: IEDA, Ryoko, Tokyo 105-6409 (JP); YAMANAKA, Daichi, Tokyo 105-6409 (JP); TACHIBANA, Shinji, Tokyo 105-6409 (JP); OGAWARA, Shogo, Tokyo 105-6409 (JP); KAMEI, Toshiaki, Tokyo 105-6409 (JP)
(74) Representative: MERH-IP Matias Erny Reichl Hoffmann Patentanwälte PartG mbB
(86) International application number: PCT/JP2024/022765
(87) International publication number: WO 2025/009426

(57) **Abstract**

An object of the present invention is to provide a compact gripping device capable of holding objects of different shapes and sizes. A gripping device 100 of the present invention includes: a first plate member 110; a second plate member 120; and a third plate member 130, the first plate member 110, the second plate member 120, and the third plate member 130 being arranged in parallel in this order, the gripping device 100 gripping an object such that the object is held between the first plate member 110 and the second plate member 120 and gripping an object such that the object is held between the second plate member 120 and the third plate member 130. A holdable width W3 that is capable of holding the object between the first plate member 110 and the second plate member 120, and a holdable width W2 that is capable of holding the object between the second plate member 120 and the third member 130 are different from each other (refer to Fig. 1).

## Description

### Technical Field

This invention relates to a gripping device, a conveying device, and a gripping method.

### Background Art

In an automatic assembly facility for analyzers or the like, various types of assembly objects are gripped by a gripping device attached to the distal end of a manipulator.

Patent Literature 1 discloses a robot hand having a gripping device. The robot hand of Patent Literature 1 "includes: a first holding member shaped like a plate; a second holding member that is disposed on the outer periphery of the first holding member and is shaped like a plate; a third holding member that is disposed on the reverse side of the outer periphery of the first holding member from the second holding member and is shaped like a plate; and a support mechanism that supports the first holding member and the second holding member such that the first holding member and the second holding member can be brought close to or separated from each other, and supports the first holding member and the third holding member such that the first holding member and the third holding member can be brought close to or separated from each other".

### Citation List

### Patent Literature

Patent Literature 1: Japanese Unexamined Patent Application Publication No. 2014-233807

### Summary of Invention

### Technical Problem

In the automatic assembly facility for handling a variety of assembly objects, the gripping device needs to be changed as appropriate according to the shape and size of an object.

An object of the present invention is to provide a gripping device, a conveying device, and a gripping method, by which objects of different shapes and sizes can be gripped.

### Solution to Problem

A gripping device of the present invention includes: a first plate member; a second plate member; and a third plate member, the first plate member, the second plate member, and the third plate member being arranged in parallel in this order, the gripping device gripping an object such that the object is held between the first plate member and the second plate member, and gripping an object such that the object is held between the second plate member and the third plate member. In the gripping device, a first holdable width that is capable of holding the object between the first plate member and the second plate member, and a second holdable width that is capable of holding the object between the second plate member and the third member are different from each other.

A conveying device of the present invention includes: the gripping device described above; and a manipulator to which the gripping device is attached.

A gripping method of the present invention includes: gripping an object between a first plate member and a second plate member by bringing the first plate member and the second plate member close to each other, the first and second plate members being arranged in parallel; and by separating the first plate member from the second plate member, gripping, between the second plate member and a third plate member that is disposed in parallel with the second plate member and is located at a fixed position, an object having a different width from the object.

### Advantageous Effects of Invention

According to the present invention, it is possible to grip objects which have different shapes and sizes. Objects, configurations, and effects other than the above will be apparent from the description of the following embodiments.

### Brief Description of Drawings

[Fig. 1] Fig. 1 is a plan view showing the configuration of a gripping device 100.
[Fig. 2] Fig. 2 is a side view showing the configuration of a conveying device 200.
[Fig. 3] Fig. 3 shows a gripping method of an object A.
[Fig. 4] Fig. 4 shows a gripping method of an object B.
[Fig. 5] Fig. 5 is a plan view showing the configuration of a gripping device 500.

### Description of Embodiments

Embodiments of the present invention will be specifically described below in accordance with the accompanying drawings. In the following embodiments, it is needless to say that the components (including element steps) are not essential unless otherwise specified or unless the components are clearly essential in principle.

### First Embodiment

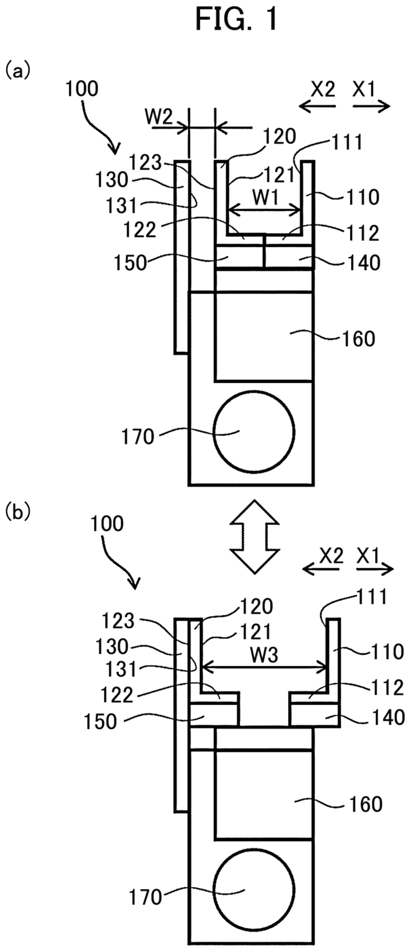

Fig. 1 is a plan view showing the configuration of a gripping device 100 according to a first embodiment. Here, (a) of Fig. 1 is a plan view showing a state in which a first plate member 110 and a second plate member 120 of the gripping device 100 are close to each other, and (b) of Fig. 1 is a plan view showing a state in which the first plate member 110 and the second plate member 120 of the gripping device 100 are separated from each other.

### (Gripping device 100)

The gripping device 100 includes the first plate member 110, the second plate member 120, a third plate member 130, a first protruding part 140, a second protruding part 150, an actuator 160, and a robot flange 170. The gripping device 100 grips an object by holding the object between the first plate member 110 and the second plate member 120 and grips an object by holding the object between the second plate member 120 and the third plate member 130. The object is, for example, a unit constituting an automatic analyzer for testing an ion concentration and a tumor marker or the like in a biological sample. Note that the object is not limited to a unit constituting an automatic analyzer. The object gripped by the first plate member 110 and the second plate member 120 and the object gripped by the second plate member 120 and the third plate member 130 may have different shapes or different sizes.

### (First plate member 110)

The first plate member 110, the second plate member 120, and the third plate member 130 are arranged in parallel in this order. The first plate member 110 is a member that is almost L-shaped in horizontal section and has a gripping surface 111 that grips an object and a contact portion 112 that comes into contact with the second plate member 120 when approaching the second plate member 120. The first plate member 110 is configured so as to be capable of moving in a direction (X1 direction in the drawing) that separates from the second plate member 120 and a direction (X2 direction in the drawing) that approaches the second plate member 120.

### (Second plate member 120)

The second plate member 120 is a member that is almost L-shaped in horizontal section and has a gripping surface 121 that grips an object with the gripping surface 111 of the first plate member 110, a contact portion 122 that comes into contact with the first plate member 110 when approaching the first plate member 110, and a gripping surface 123 that grips the object with the third plate member 130. The second plate member 120 is configured so as to be capable of moving in the direction (X2 direction in the drawing) that separates from the first plate member 110 and the direction (X1 direction in the drawing) that approaches the first plate member 110. The second plate member 120 may have the same shape as the first plate member or have a different shape from the first plate member.

### (Third plate member 130)

The third plate member 130 is a plate-like member that is located in a fixed manner. The third plate member 130 has a gripping surface 131 that grips an object with the gripping surface 123 of the second plate member 120.

### (First protruding part 140)

The first protruding part 140 is fixed to the first plate member 110. The first protruding part 140 is integrated with the first plate member 110 and is configured so as to be capable of moving in the direction (X1 direction in the drawing) that separates from the second plate member 120 and the direction (X2 direction in the drawing) that approaches the second plate member 120. The first protruding part 140 protrudes from the gripping surface 111 of the first plate member 110 toward the second plate member 120. The first protruding part 140 comes into contact with the second protruding part 150 when approaching the second protruding part 150.

### (Second protruding part 150)

The second protruding part 150 is fixed to the second plate member 120. The second protruding part 150 is integrated with the second plate member 120 and is configured so as to be capable of moving in the direction (X2 direction in the drawing) that separates from the first plate member 110 and the direction (X1 direction in the drawing) that approaches the first plate member 110. The second protruding part 150 protrudes from the gripping surface 121 of the second plate member 120 toward the first plate member 110. The second protruding part 150 comes into contact with the first protruding part 140 when approaching the first protruding part 140.

When the first plate member 110 and the second plate member 120 approach each other, the first protruding part 140 and the second protruding part 150 come into contact with each other so as to limit the approach of the first plate member 110 and the second plate member 120.

In the present embodiment, when the first plate member 110 and the second plate member 120 approach each other, the contact portion 112 of the first plate member 110 and the contact portion 122 of the second plate member 120 come into contact with each other, and the first protruding part 140 and the second protruding part 150 come into contact with each other. However, both of the contact portions and the protruding parts do not need to come into contact with each other. That is, when the first plate member 110 and the second plate member 120 approach each other, if the contact portion 112 of the first plate member 110 and the contact portion 122 of the second plate member 120 come into contact with each other, the first protruding part 140 and the second protruding part 150 do not need to come into contact with each other. In addition, when the first plate member 110 and the second plate member 120 approach each other, if the first protruding part 140 and the second protruding part 150 come into contact with each other, the contact portion 112 of the first plate member 110 and the contact portion 122 of the second plate member 120 do not need to come into contact with each other.

### (Actuator 160 (drive mechanism))

The actuator 160 drives the first plate member 110 and the second plate member 120 such that the first plate member 110 and the second plate member 120 approach each other and separate from each other. For example, the actuator 160 may drive the first plate member 110 and the second plate member 120 by air pressure or drive the first plate member 110 and the second plate member 120 using a stepping motor. When an object is gripped by the first plate member 110 and the second plate member 120, the actuator 160 drives the first plate member 110 and the second plate member 120 such that the first plate member 110 and the second plate member 120 approach each other. When an object is gripped by the second plate member 120 and the third plate member 130, the actuator 160 drives the first plate member 110 and the second plate member 120 such that the first plate member 110 and the second plate member 120 separate from each other.

The driving of the first plate member 110 and the second plate member 120 by the single actuator 160 allows an object to be gripped between the first plate member 110 and the second plate member 120 and an object to be gripped between the second plate member 120 and the third plate member 130.

### (Robot flange 170)

The robot flange 170 is provided so as to attach the gripping device 100 to a manipulator, which will be described later.

### (Holdable width)

When the first plate member 110 and the second plate member 120 approach each other and the contact portion 112 and the contact portion 122 come into contact with each other (or the first protruding part 140 and the second protruding part 150 come into contact with each other), the width between the gripping surface 111 of the first plate member 110 and the gripping surface 121 of the second plate member 120 is W1. In addition, in this case, the width between the gripping surface 123 of the second plate member 120 and the gripping surface 131 of the third plate member 130 is W2. Since the second plate member 120 is restricted from moving in the direction (X1 direction) that separates from the third plate member 130, the maximum holdable width (second holdable width) which is capable of holding the object between the second plate member 120 and the third plate member 130 is W2. That is, the second plate member 120 and the third plate member 130 can grip an object with a width of 0 to W2.

When the first plate member 110 and the second plate member 120 separate from each other and the second plate member 120 comes into contact with the third plate member 130, the width between the gripping surface 111 of the first plate member 110 and the gripping surface 121 of the second plate member 120 is W3 (> W1). In addition, in this case, the gripping surface 123 of the second plate member 120 and the gripping surface 131 of the third plate member 130 come into contact with each other. Since the second plate member 120 is restricted from moving in the direction (X2 direction) that separates from the first plate member 110, the maximum holdable width (first holdable width) which is capable of holding an object between the first plate member 110 and the second plate member 120 is W3, which is different from W2. That is, the first plate member 110 and the second plate member 120 can grip an object with a width of W1 to W3.

Although the second plate member 120 moves into contact with the third plate member 130, the movement may be restricted before the second plate member 120 comes into contact with the third plate member 130.

### (Conveying device 200)

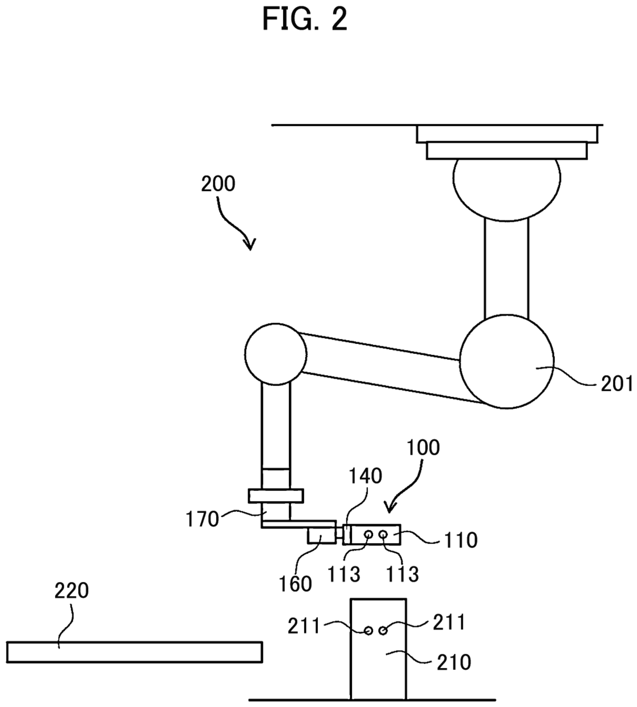

Fig. 2 shows the configuration of a conveying device 200. The conveying device 200 includes the gripping device 100 and a manipulator 201 (robot arm). The robot flange 170 of the gripping device 100 is attached to the distal end of the manipulator 201. The conveying device 200 grips an object 210 and conveys the object to a conveyance destination 220.

The first plate member 110 has two holes 113 corresponding to two protrusions 211 of the object 210. The gripping device 100 fits the two protrusions 211 of the object 210 into the two holes 113 of the first plate member 110 and grips the object 210. Thus, the protrusions 211 and the holes 113 can determine the gripping position of the object 210, and the protrusions 211 and the holes 113 can prevent the rotation of the object 210.

In addition, the number of protrusions 211 and the number of holes 113 may be one or three or more.

In the example of Fig. 2, the holes 113 corresponding to the protrusions 211 of the object 210 are formed on the first plate member 110. If the holes are formed on the object 210, protrusions corresponding to the holes of the object 210 may be formed on the first plate member 110. In other words, on the first plate member 110, a concave portion or a convex portion that corresponds to a convex portion or a concave portion provided on the object 210 may be formed. Alternatively, a convex portion or a concave portion that corresponds to a concave portion or a convex portion of the object may be formed on the second plate member 120 or the third plate member 130.

### (Gripping method using first plate member 110 and second plate member 120)

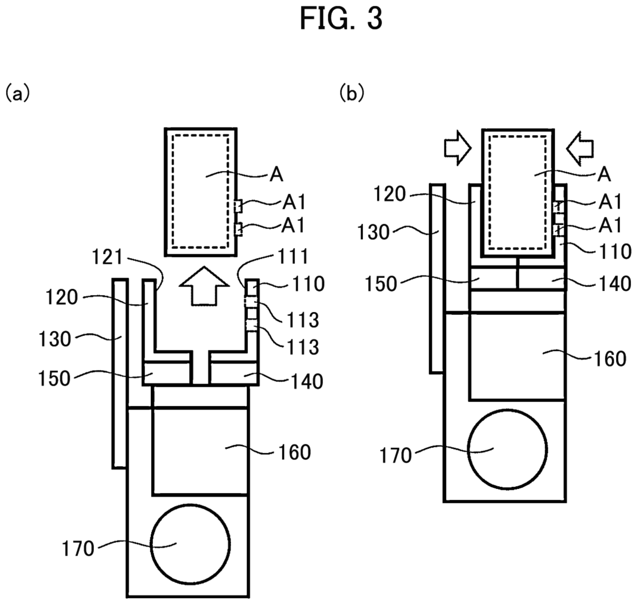

Fig. 3 shows a gripping method of an object A using the first plate member 110 and the second plate member 120. As shown in (a) of Fig. 3, first, the actuator 160 drives the first plate member 110 and the second plate member 120 such that the first plate member 110 and the second plate member 120 separate from each other. At this time, a width between the gripping surface 111 of the first plate member 110 and the gripping surface 121 of the second plate member 120 is larger than the width of the object A.

Thereafter, the manipulator 201 moves the gripping device 100 to a direction of the object A and places the first plate member 110 and the second plate member 120 with the object A held therebetween.

The actuator 160 then drives the first plate member 110 and the second plate member 120 such that the first plate member 110 and the second plate member 120 approach each other. Thus, the object A is gripped by being held between the gripping surface 111 of the first plate member 110 and the gripping surface 121 of the second plate member 120. At this time, two protrusions A1 of the object A are fit into the two holes 113 of the first plate member 110, so that the object A is gripped at a predetermined position by the gripping device 100 without being rotated.

### (Gripping method using the second plate member 120 and the third plate member 130)

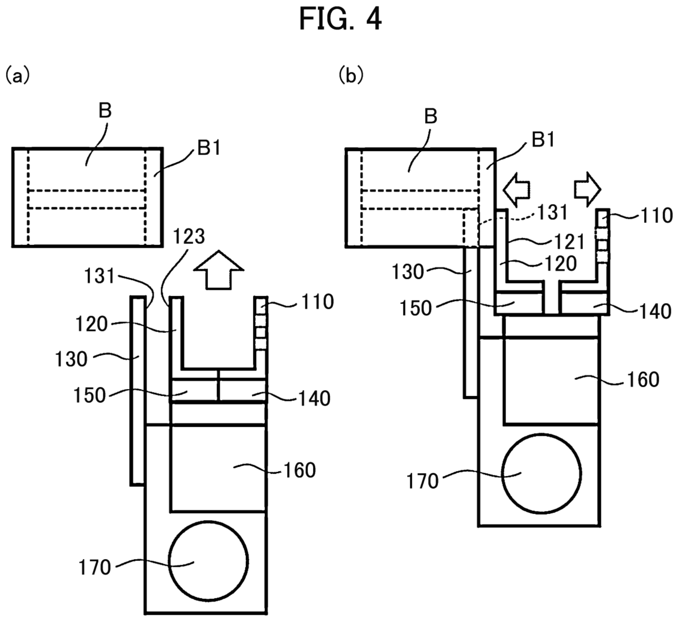

Fig. 4 shows a gripping method of an object B using the second plate member 120 and the third plate member 130. As shown in (a) of Fig. 4, first, the actuator 160 drives the first plate member 110 and the second plate member 120 such that the first plate member 110 and the second plate member 120 approach each other. At this time, the width between the gripping surface 131 of the third plate member 130 and the gripping surface 123 of the second plate member 120 is larger than the thickness of a wall B1 of the object B.

Thereafter, the manipulator 201 moves the gripping device 100 to the direction of the object B and places the third plate member 130 and the second plate member 120 such that the wall B1 of the object B is held therebetween.

The actuator 160 then drives the first plate member 110 and the second plate member 120 such that the first plate member 110 and the second plate member 120 separate from each other. Thus, the object B is gripped such that the wall B1 of the object B is held between the gripping surface 131 of the third plate member 130 and the gripping surface 123 of the second plate member 120.

### (Effect of first embodiment)

In the first embodiment, the maximum holdable width W3 (first holdable width) which is capable of holding the object between the first plate member 110 and the second plate member 120 is different from the maximum holdable width W1 (second holdable width) which is capable of holding the object between the second plate member 120 and the third plate member 130. Thus, various objects of different shapes and sizes can be gripped.

Furthermore, in the first embodiment, the actuator 160 (drive mechanism) is provided to drive the first plate member 110 and the second plate member 120 such that the first plate member 110 and the second plate member 120 approach each other and separate from each other. In the first embodiment, the first plate member 110 and the second plate member 120 can be brought close to each other and separated from each other by the single actuator 160, thereby achieving downsizing of the device.

Furthermore, in the first embodiment, even if the third plate member 130 is fixed without being driven, the second plate member 120 approaches or separates from the third plate member 130, allowing objects of various shapes and sizes to be gripped between the second plate member 120 and the third plate member 130.

Moreover, in the first embodiment, the actuator 160 brings the first plate member 110 and the second plate member 120 close to each other so as to grip the object between the first plate member 110 and the second plate member 120, and the actuator 160 separates the first plate member 110 from the second plate member 120 so as to grip the object between the second plate member 120 and the third plate member 130. As described above, in the first embodiment, the object can be gripped in the approach and separation of the first plate member 110 and the second plate member 120.

At least one of the first plate member 110, the second plate member 120, and the third plate member 130 has a concave portion or a convex portion that corresponds to a convex portion or a concave portion that is provided on the object. Thus, the object can be gripped at a predetermined position.

Furthermore, in the first embodiment, the first protruding part 140 protruding from the gripping surface 111 of the first plate member 110 toward the second plate member 120 is provided, and the second protruding part 150 protruding from the gripping surface 121 of the second plate member 120 toward the first plate member 110 is provided. Thus, the first protruding part 140 and the second protruding part 150 come into contact with each other, thereby limiting the gripping force between the first plate member 110 and the second plate member 120. This can prevent an excessive pressure from being applied to the object.

In addition, the gripping device 100 is attached to the manipulator 201, allowing the object gripped by the gripping device 100 to be conveyed to the conveyance destination 220.

### Second Embodiment

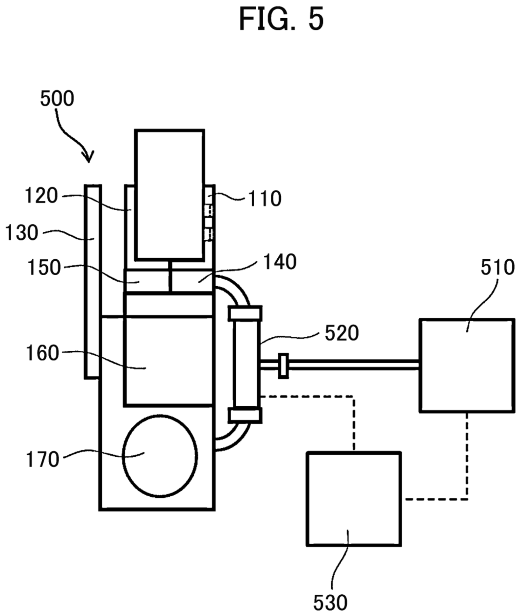

In a second embodiment, a gripping device 500 for driving a first plate member 110 and a second plate member 120 by air pressure will be described below. Fig. 5 shows the configuration of the gripping device 500 according to the second embodiment. As in the first embodiment, the gripping device 500 of the second embodiment includes the first plate member 110, the second plate member 120, a third plate member 130, a first protruding part 140, a second protruding part 150, an actuator 160, and a robot flange 170. An similar to that of the first embodiment is omitted as appropriate.

The gripping device 500 of the second embodiment further includes a compressor 510 and a solenoid valve 520. The compressor 510 supplies compressed air. The solenoid valve 520 switches destinations of compressed air that is supplied from the compressor 510. For example, compressed air supplied in one direction via the solenoid valve 520 moves parts of the actuator 160 (e.g., an air cylinder) to bring the first plate member 110 and the second plate member 120 closer to each other. Furthermore, compressed air supplied opposite to the one direction moves the parts of the actuator 160 (e.g., an air cylinder) to separate the first plate member 110 and the second plate member 120 from each other.

In addition, the gripping device 500 of the second embodiment includes a control unit 530 that controls the flow rate of the compressed air supplied from the compressor 510 or controls a valve opening direction of the solenoid valve 520. The control unit 530 is an ordinary computer system and includes a processor and a memory. By adjusting the flow rate of compressed air supplied from the compressor 510, the control unit 530 varies, for example, the pressure of air supplied to the air cylinder. This can adjust the gripping force of the gripping device 500 to a variable force.

For example, the control unit 530 adjusts the flow rate of compressed air supplied from the compressor 510, according to a flow rate specified by the operator of the gripping device 500. Furthermore, the control unit 530 may determine and adjust the flow rate of the compressed air from an object to be gripped, according to a data table in which the type, size, and structure or the like of the object and the flow rate of the compressed air are associated with each other.

### (Effect of Second Embodiment)

In the second embodiment, the actuator 160 drives the first plate member 110 and the second plate member 120 by air pressure, so as to make a fine adjustment to a pressure when an object is gripped. Thus, even an object having low strength or a deformable object such as a hollow part can be gripped by the gripping device 500 without being broken or deformed.

In addition, an object is gripped by using an air pressure in the second embodiment, which is advantageous to a small and lightweight object. Moreover, even if a concave portion or a convex portion cannot be formed on an object, the object can be gripped by air pressure. Furthermore, the tact time can be shortened by reducing the opening/closing distance between the first plate member 110 and the second plate member.

Other effects are similar to those of the first embodiment.

### Modification example

It should be noted that the present invention is not limited to the embodiments described above, and includes various modification examples. For example, the above-described embodiments have been described in detail in order to facilitate the understanding of the present invention, and the present invention is not necessarily limited to those including all of the described configurations. In addition, part of the configuration of one embodiment can be replaced with the configurations of other embodiments, and in addition, the configuration of the one embodiment can also be added with the configurations of other embodiments. In addition, part of the configuration of each of the embodiments can be subjected to addition, deletion, and replacement with respect to other configurations.

For example, in the first embodiment, the third plate member 130 is fixed to be attached to the gripping device 100. The third plate member 130 may be driven by the actuator 160 or other actuators so as to approach or separate from the second plate member 120.

### List of Reference Signs

- 100: gripping device
- 110: first plate member
- 111: gripping surface
- 112: contact portion
- 120: second plate member
- 121: gripping surface
- 122: contact portion
- 123: gripping surface
- 130: third plate member
- 131: gripping surface
- 140: first protruding part
- 150: second protruding part
- 160: actuator
- 170: robot flange
- 200: conveying device
- 201: manipulator
- 210: object
- 220: conveyance destination
- 500: gripping device
- 510: compressor
- 520: solenoid valve

## Claims

1. A gripping device comprising: a first plate member; a second plate member; and a third plate member, the first plate member, the second plate member, and the third plate member being arranged in parallel in this order, the gripping device gripping an object such that the object is held between the first plate member and the second plate member and gripping an object such that the object is held between the second plate member and the third plate member, wherein
a first holdable width that is capable of holding the object between the first plate member and the second plate member, and a second holdable width that is capable of holding the object between the second plate member and the third member are different from each other.

2. The gripping device according to claim 1, further comprising a drive mechanism that drives the first plate member and the second plate member such that the first plate member and the second plate member approach each other and separate from each other.

3. The gripping device according to claim 2, wherein
a position of the third plate member is located at a fixed position.

4. The gripping device according to claim 3, wherein
the drive mechanism brings the first plate member and the second plate member close to each other so as to grip the object between the first plate member and the second plate member, and the drive mechanism separates the first plate member from the second plate member so as to grip the object between the second plate member and the third plate member.

5. The gripping device according to claim 2, wherein
the drive mechanism drives the first plate member and the second plate member by air pressure.

6. The gripping device according to claim 1, wherein
at least one of the first plate member, the second plate member, and the third plate member has a concave portion or a convex portion that corresponds to a convex portion or a concave portion that is provided on the object.

7. The gripping device according to claim 1, further comprising:
a first protruding part protruding from a gripping surface of the first plate member toward the second plate member; and
a second protruding part protruding from a gripping surface of the second plate member toward the first plate member, wherein
the first protruding part and the second protruding part come into contact with each other so as to limit approach of the first plate member and the second plate member.

8. A conveying device comprising:
the gripping device according to any one of claims 1 to 7; and
a manipulator to which the gripping device is attached.

9. A gripping method comprising:
gripping an object between a first plate member and a second plate member by bringing the first plate member and the second plate member close to each other, the first and second plate members being arranged in parallel; and
by separating the first plate member from the second plate member, gripping, between the second plate member and a third plate member that is disposed in parallel with the second plate member and is located at a fixed position, an object having a different width from the object.

## Amended claims

### Amended claims under Art. 19.1 PCT

1. (Amended) A gripping device comprising: a first plate member; a second plate member; and a third plate member, the first plate member, the second plate member, and the third plate member being arranged in parallel in this order, the gripping device gripping an object such that the object is held between the first plate member and the second plate member and gripping an object such that the object is held between the second plate member and the third plate member, wherein
a first holdable width that is capable of holding the object between the first plate member and the second plate member, and a second holdable width that is capable of holding the object between the second plate member and the third member are different from each other,
a drive mechanism is provided that drives the first plate member and the second plate member such that the first plate member and the second plate member approach each other and separate from each other, and
the drive mechanism drives the first plate member and the second plate member by air pressure.

2. (Deleted)

3. (Amended) The gripping device according to claim 1, wherein
a position of the third plate member is located at a fixed position.

4. The gripping device according to claim 3, wherein
the drive mechanism brings the first plate member and the second plate member close to each other so as to grip the object between the first plate member and the second plate member, and the drive mechanism separates the first plate member from the second plate member so as to grip the object between the second plate member and the third plate member.

5. (Deleted)

6. The gripping device according to claim 1, wherein at least one of the first plate member, the second plate member, and the third plate member has a concave portion or a convex portion that corresponds to a convex portion or a concave portion that is provided on the object.

7. The gripping device according to claim 1, further comprising:
a first protruding part protruding from a gripping surface of the first plate member toward the second plate member; and
a second protruding part protruding from a gripping surface of the second plate member toward the first plate member, wherein
the first protruding part and the second protruding part come into contact with each other so as to limit approach of the first plate member and the second plate member.

8. (Amended) A conveying device comprising:
the gripping device according to any one of claims 1, 3, 4, 6, and 7; and
a manipulator to which the gripping device is attached.

9. (Amended) A gripping method comprising:
gripping an object between a first plate member and a second plate member by bringing the first plate member and the second plate member close to each other, the first and second plate members being arranged in parallel; and
by separating the first plate member from the second plate member, gripping, between the second plate member and a third plate member that is disposed in parallel with the second plate member and is located at a fixed position, an object having a different width from the object, wherein
a drive mechanism, that drives the first plate member and the second plate member such that the first plate member and the second plate member approach each other and separate from each other, drives the first plate member and the second plate member by air pressure.
